# EUROPEAN PATENT SPECIFICATION

(11) **EP 1 371 483 B1**
(45) Date of publication and mention of the grant of the patent: **06.05.2009**
(21) Application number: 03394051.1
(22) Date of filing: 09.06.2003
(51) Int. Cl.: B32B 37/14

(54) **Manufacture of insulating panels**
Verfahren zur Herstellung von Dämmplatten
Procédé de fabrication de panneaux d'isolation

(30) Priority: 10.06.2002 IE 20020466
(43) Date of publication of application: 17.12.2003
(73) Proprietor: Kingspan Research and Developments Limited, Kingscourt, County Cavan (IE)
(72) Inventor: McDonald, Patrick, c/o Kingspan R&D Limited, County Cavan (IE)
(74) Representative: O'Brien, John Augustine

(56) References cited:
- GB-A- 2 257 086
- GB-A- 2 325 639
- GB-A- 2 325 640
- US-A- 4 659 419

## Description

### Introduction

The invention relates to a method and apparatus for manufacturing insulating panels of the type comprising a profiled external skin and an internal backing tray having an insulating core therebetween.

UK-A-2227712, UK-A-2257086, UK-A-2325640, UK-A-2325641, UK-A-2325644 and UK-A-2325645 describe methods and apparatus for manufacturing insulating panels.

UK-A-2257086A describes a method for manufacturing an insulating panel of the type comprising a first skin and a second skin having an insulating core therebetween, the method comprising the steps of:
providing a first outer skin length having a leading edge and a trailing edge;
providing a following second outer skin length having a leading edge and a trailing edge;
leading the first outer skin length along a flat bed with the outer surface of the skin lowermost;
leading the following outer skin length along a flat bed with the outer surface of the skin lowermost;
partially overlapping the second outer skin length with the first outer skin length, the leading edge of the second outer skin length overlapping the trailing edge of the first skin length;
applying a jointing means across the joint between the leading and following outer skin lengths;
applying liquid insulating foam reactants onto the outer skin lengths;
leading an inner skin over the outer skin lengths including the joint;
heating the assembly of the outer and inner skins in an oven to allow the liquid foam reactants to expand and form an insulating core between the skins;
providing a control signal means; and
performing operations in accordance with the control signal means.

These methods are very efficient in use, however, there is an increasing need to improve the manufacturing efficiency to cut costs and maximise the production of such insulating panels.

This invention is therefore directed towards providing an improved method and apparatus for efficient manufacturing of such insulating panels.

### Statements of Invention

The invention is **characterised in that** the method comprises:
detecting the leading edge of the second outer skin length at the overlap to provide a first control signal;
detecting the trailing edge of the first outer skin length at the overlap to provide a second control signal; and
disabling the operation unless both of the first and second control signals are provided to a controller.

In one embodiment the edge is detected using a laser.

In one arrangement the operation comprises applying a jointing tape across the joint at the overlap of the leading edge of the second outer panel length and the trailing edge of the first outer panel length. In this case the jointing tape is preferably applied by drawing a jointing tape across the joint between the first and second outer skin lengths and automatically applying the tape to the joint between the outer skin lengths. Preferably the outer skin lengths are profiled and the method includes the step of conforming the jointing tape to the profile of the outer skin lengths.

In an alternative or additional arrangement the operation performed is cutting the inner skin and the foam core of an insulating panel assembly. In this case the method preferably comprises providing a cutting means having a leading cutting means and a trailing cutting means; using the leading cutting means, cutting at least the inner skin and forming a first cut; and lading the trailing cutting means through the first cut to cut the foam core.

In an alternative or additional arrangement the operation performed is applying a separating force to separate the panels at the joint. In this case the method preferably comprises the steps of:-
providing a first clamping means and a second clamping means;
clamping a leading panel section adjacent to the joint between adjacent panel sections;
clamping a trailing panel section adjacent to the joint between adjacent panel sections: and
after clamping, applying a separating force between the first and second clamping means to separate the panel sections at the joint.

The invention also provides an insulating panel manufactured by a method of the invention.

### Brief Description of the Drawings

Fig. A is a cross-sectional view of a typical panel formed using the method of the invention;
Fig. 1 is a flow chart of the method of the invention;
Fig. 2 is a perspective view of two external sheet lengths used in the method;
Fig. 3 is a cross-sectional view of the assembled sheet lengths of Fig. 2;
Fig. 4 is a perspective view of a joint between the external sheet lengths of Figs. 2 and 3;

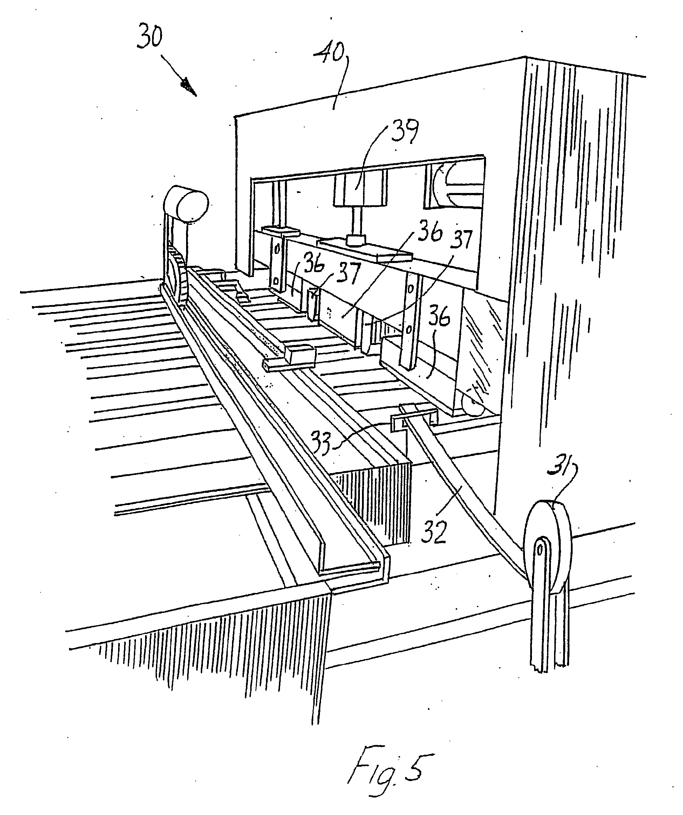

Fig. 5 is a perspective view of a jointing tape applicator used in the method of the invention;
Figs. 6(a) to 6(c) are end elevational views of the jointing tape applicator of Fig. 4, in use;
Fig. 7 is a cross-sectional view of a panel assembly;
Fig. 8 is a-cross sectional view of the assembly of Fig. 7 with a cut between adjacent sections of the assembly;
Fig. 9 is a perspective view of a cutting means in use;
Fig. 10 is a side elevational view illustrating the operation of the cutting means of Fig. 9;
Fig. 11 is a cross-sectional view of a panel assembly comprising adjacent panel sections;
Fig. 12 is a cross-sectional view of the panel sections of Fig. 11, separated;

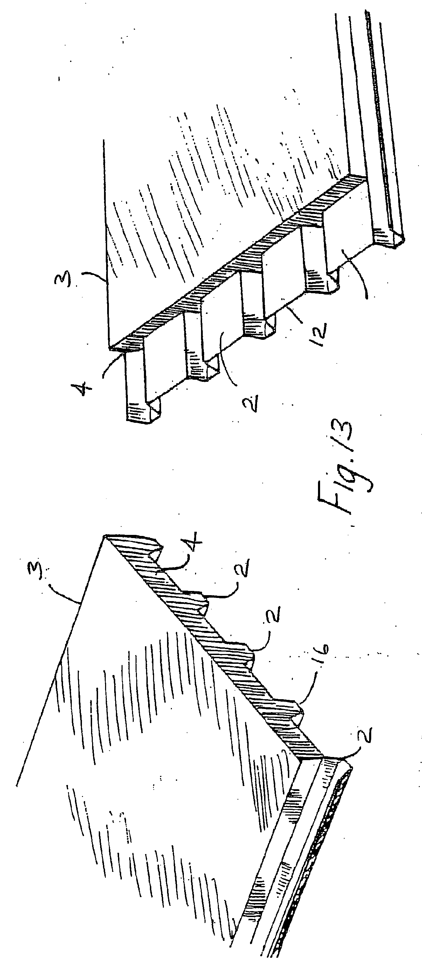

Fig. 13 is a perspective view of the panel sections, separated;
Fig. 14 is a side, partially cross sectional view of a panel breaker apparatus used in the method of the invention in a first position of use;
Fig. 15 is a side view of the breaker apparatus of Fig. 14 in a second position of use; and
Fig. 16 is a side view of the breaker apparatus of Fig. 14 in a final position of use;

### Detailed Description of the Invention

Referring to the drawings, the method and apparatus of the invention is used for forming an insulated panel of the type which is illustrated in Fig. A and indicated generally by the reference numeral 1. The panel 1 comprises a profiled external skin 2 of steel or aluminium material, an internal backing tray 3 also of steel or aluminium material and an insulating core 4 of polyurethane, polyisocyanurate or phenolic foam material which fills the space between the external skin 2 and backing tray 3. The insulated panel 1 is typically used for roofing and/or cladding systems, adjacent panels being overlapped both longitudinally and transversely to clad and/or roof a particular area.

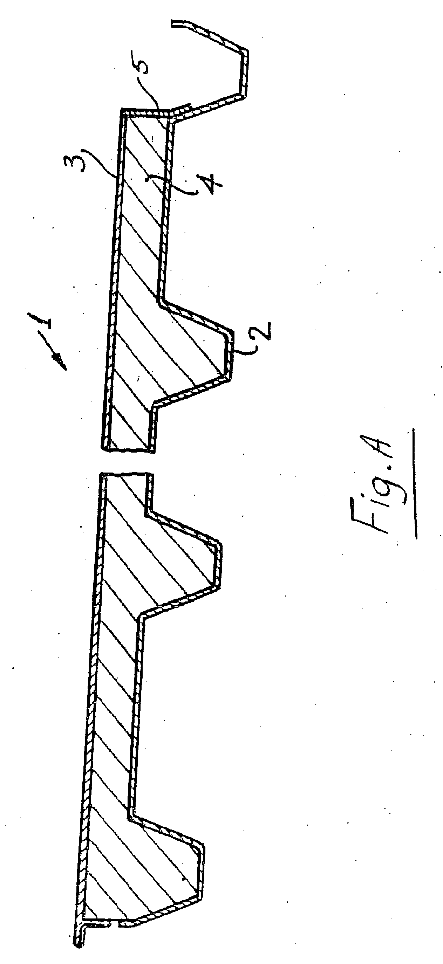

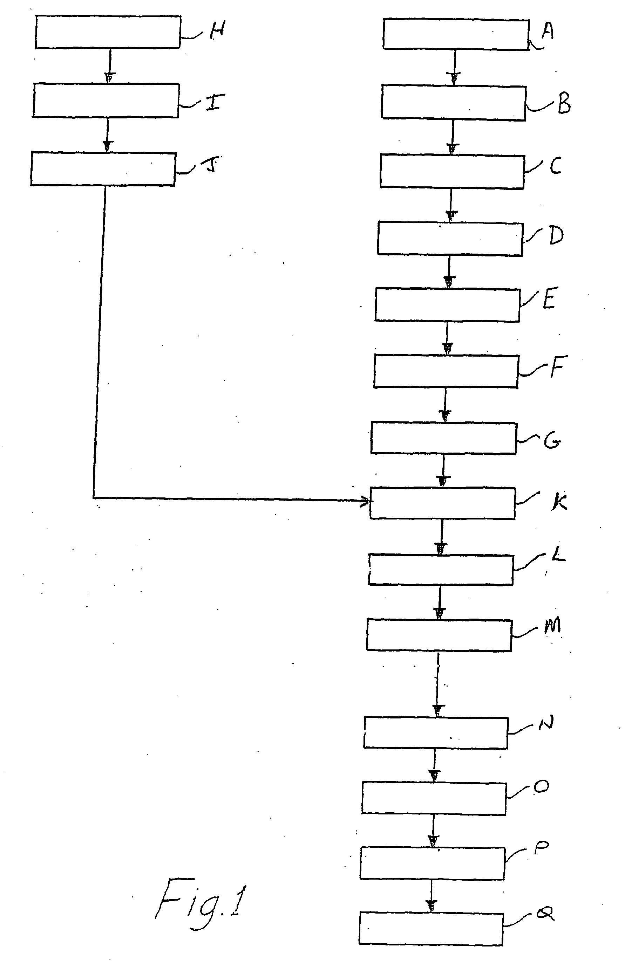

Referring particularly to Fig. 1, the method according to the invention for forming the panel 1 in a substantially continuous manner comprises the step A of leading a sheet of external skin material from a reel onto a flat bed with the outermost face of the external skin 2 lowermost. The desired longitudinal overlap between adjacent panels are automatically marked using an ink jet apparatus. The external skin 2 is then profiled at B and cut to length in step C. The trailing edge of the external skin 2 of a first leading panel in the line is lifted up and placed down on the leading edge portion of the following external skin 2 in step D. As will be described in more detail below, a joint between the external skins 2 is made by automatically applying a jointing tape at E. The external skins 2 are then preheated at F prior to application of liquid foam reactants at G.

A sheet of backing tray material is led from a reel in step H, profiled in step I, and preheated in step J. The profiled backing tray 3 is then continuously applied over the overlapped external skins 2 and liquid foam reactants in step K. As the backing tray 3 is applied, a longitudinally extending side sealing tape 5 is also applied at K between the backing tray 3 and the external skin 2 to confine the foam core 4 in the desired space.

The liquid foam reactants are then allowed to expand to fill the space between the external skin 2 and backing tray 3 by passing the assembly through the oven in step M in which the reactants are heated and allowed to expand to the desired thickness of foam insulating core 4.

The output from the oven is a continuous longitudinal sheet of insulating panels 1 interconnected by the jointing tape. As will be described in more detail below, at the joint between adjacent external skins, the backing tray 3 and foam core 4 are cut through to the internal (or upper) face of the external skin 2 in step N. A protective material is applied to the exposed face of the backing tray 3 in step O and adjacent panels 1 are separated at the joint in step P in preparation for stacking and packaging Q.

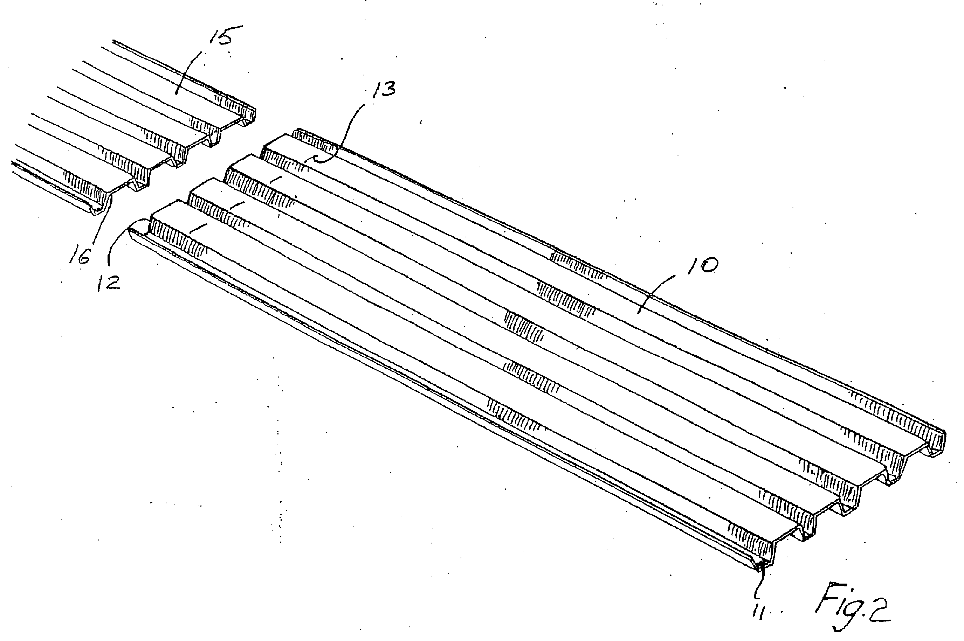

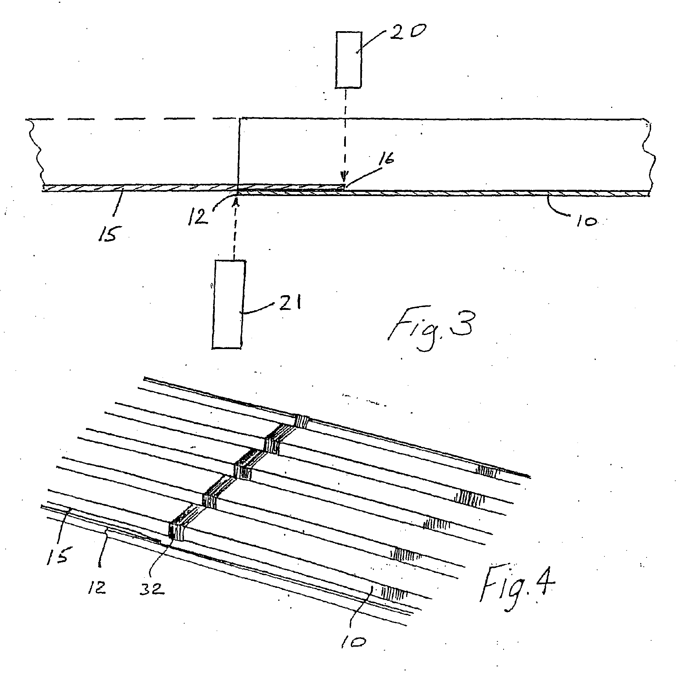

In more detail, and referring to Figs 2 and 3 a leading or first outer skin length 10 is first led along a flat bed with the outer surface (in use of the panel) lowermost. The first outer skin length has a leading edge 11 and a trailing edge 12. Marks 13 are provided on the uppermost face of the skin length 10. A following or second outer skin length 15 with a leading edge 16 is led along the flat bed with the outer surface of the skin lowermost. The second outer skin length 15 is then partially overlapped with the first outer skin length 10. On overlapping, the leading edge 16 of the second skin length 15 overlaps the trailing edge 12 of the fist skin length 10, as illustrated particularly in Fig. 3 and a jointing tape 32 is applied as described in more detail below.

At a tape applying station, the leading edge 16 of the second skin length 15 is detected by a first laser sensor 20 to provide a first control signal. The trailing edge 12 of the first skin length 10 is detected by a second laser sensor 21 to provide a second control signal.

The tape applicator is triggered automatically by a controller, only on receipt of the first and second control signals from the laser sensors 20, 21. If both control signals are not received by the controller the operation of the tape applicator is prevented/disabled. In this way the jointing tape applicator process is very closely and accurately controlled to ensure optimised operation of the tape applicator and the continuous operation of the panel line generally, at high operating speed.

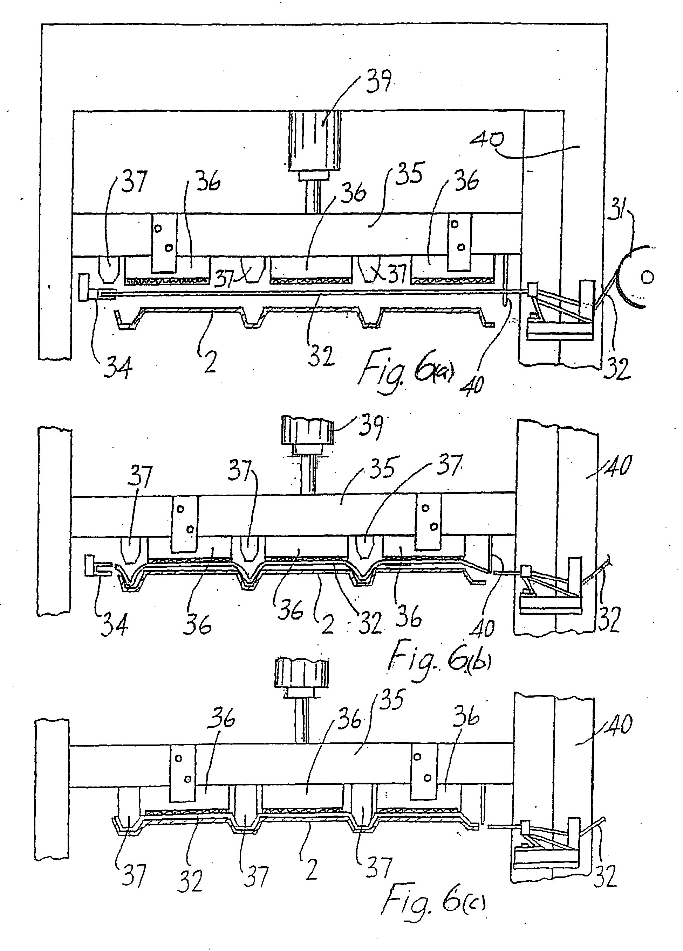

Referring particularly to Figs. 4 and 6, there is illustrated an automatic jointing tape applicator 30 used in the method of the invention to apply a jointing tape at the joint between adjacent external skins 2. Jointing tape 32 is led from a supply reel 31 to a guide 33. Gripper jaws 34 are then used to grip the free end of the tape 32 and to draw it across the bed on which the profiled external skin is travelling. The length of the jointing tape 32 drawn across the bed is longer than the width of the skin 2 to take account of the profile of the skin 2.

The length of tape 32 is then drawn under an applicator head 35 which has a number of sections 36 corresponding to the flat portions of the profile of the external skin 2 and a number of sections 37 corresponding to the corrugations of the external skin 2. The applicator head 35 is moved up and down by a ram 39 and the outer two of the head sections 36 may be moved in and out by a second ram (not shown).

As the tape 32 is drawn under the applicator head 35, it is cut to length by engaging against a blade 40. The outer two applicator head sections 36 are then moved from the outer position illustrated in Fig. 6(a) to the inner position illustrated in Fig. 6(b) to form the tape 32 into loops in the region of the corrugations. The ram 39 is then operated to drive the applicator head 35 downwardly to apply the jointing tape 32 across the profile of the external skins 2 at the overlapped joint between adjacent skins 2 as illustrated in Fig. 6(c). The tape 32 is maintained in position on the applicator head sections 36 by suction.

The line of external skins 2 is not stopped while the jointing operation takes place as the applicator 30 is mounted on a carriage 40 which travels with the line to optimise production efficiency.

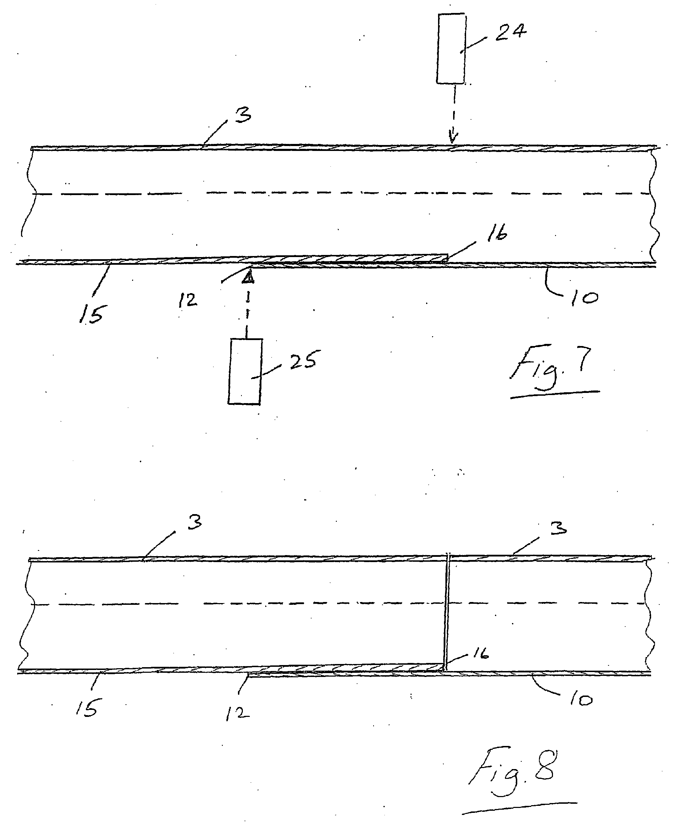

Referring to Figs. 7 and 8, at a cutting station, the leading edge 16 of the second skin length 15 is detected by a first laser sensor 24 to provide a first control signal. The trailing edge 12 of the first skin length is detected by a second laser sensor 25 to provide a second control signal.

The cutting apparatus is triggered automatically by a controller, only on receipt of the first and second control signals from the laser sensors 24, 25. If both control signals are not received by the controller the operating of the cutting apparatus is prevented/disabled. In this way the cutting process is very closely and accurately controlled to ensure optimised operation of the cutting apparatus and the continuous operation of the panel line, generally at high operating speed.

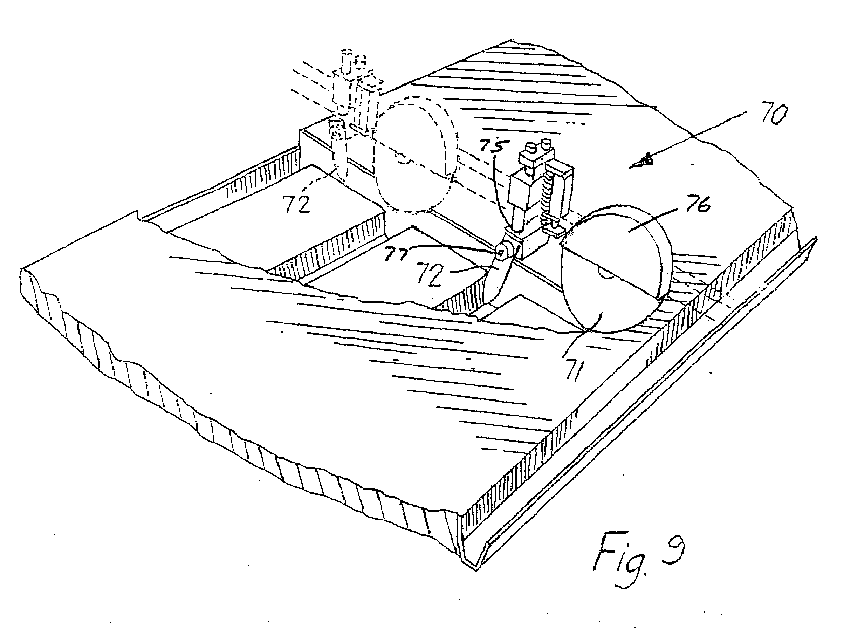

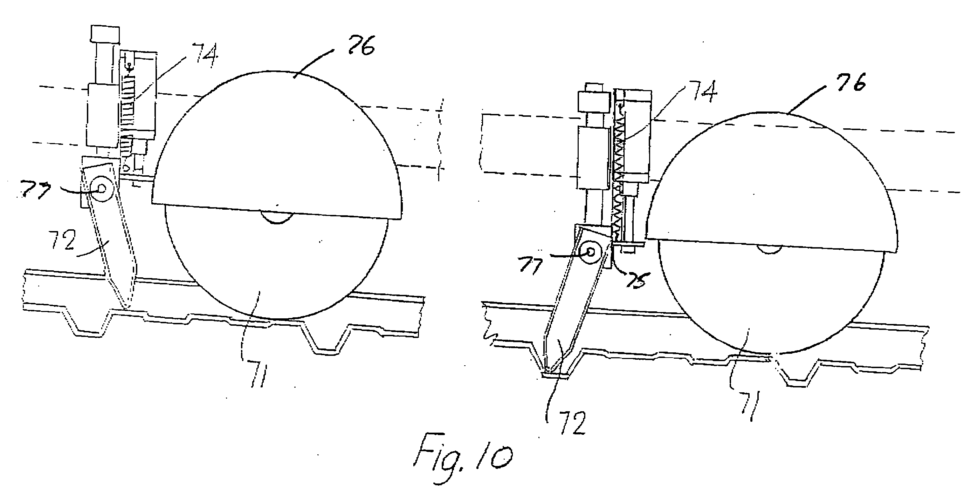

Referring particularly to Fig. 9 and 10, cutting means 70 for cutting the backing tray 3 and foam core 4 at the joint between overlapping skins 2 comprises a leading cutting means provided by a cross cut saw 71 and a following blade 72. The blade 72 is operated against the biassing of a spring 74. The blade 72 is pivotally mounted by a pivot pin 77 on a bracket 75 which is in turn mounted to the housing 76 of the cross cut saw 71 so that the blade 72 travels across following the cross cut saw 71. The blade 72 is angled forwardly in the rest position and is held in that position by the spring 74. As the blade 72 is moved across, it is angled back and joggled up and down to provide a clean cutting action.

The cross cut saw 71 is set so that the cutting edge is spaced above the upper face of the flat surface of the external skin 2. The blade 72 is set so that as it moves across its cutting edge just engages the foam core. When the joint between external skins is detected the cutting means 70 is automatically operated to cut the backing tray 3 and foam core 4. The cross cut saw 71 makes a first cut in which the blade 72 travels to cut through the core providing, in a very efficient way, a relatively clean cut. For maximum processing efficiency, the cutting means 70 is mounted on a carriage (not shown) which travels with the panel as it progresses along the line.

A detector may be used to detect the position of the corrugations of the external skin as the blade 72 travels across. When a corrugation is detected, a ram may be operated to drive the blade 72 down to engage the corrugation and to cut the foam core 4 in the corrugation through to the upper face of the external skin. The blade 72 may also be vibrated by a vibrating means (not shown) to provide a clean cut.

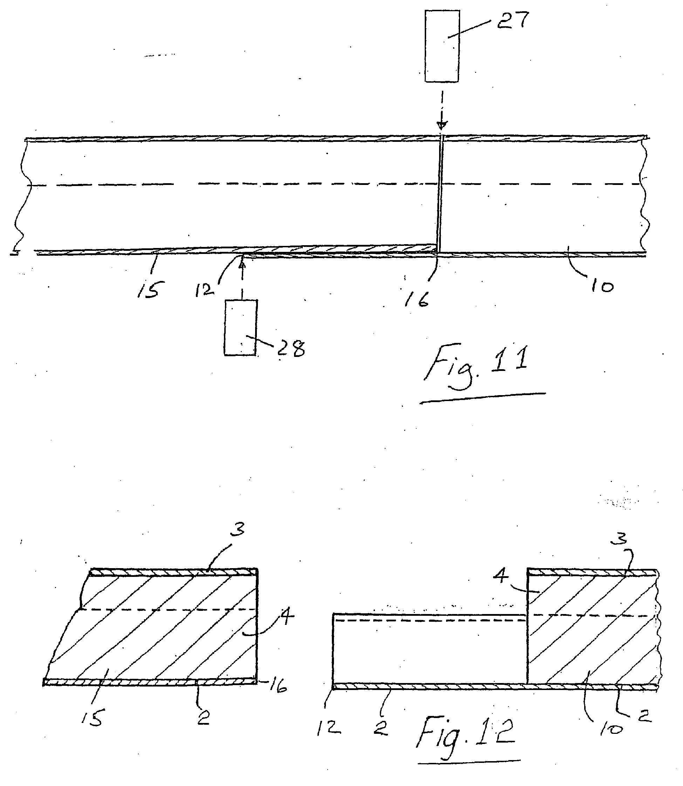

Referring to Figs. 11 and 12, at a separating station, the leading edge 16 of the second skin length 15 is detected by a first laser sensor 27 to provide a first control signal. The trailing edge 12 of the first skin length is detected by a second laser sensor 28 to provide a second control signal.

The separating apparatus is triggered automatically by a controller, only on receipt of the first and second control signals from the laser sensors 27, 28. If both control signals are not received by the controller the operating of the separating apparatus is prevented/disabled. In this way the separating process is very closely and accurately controlled to ensure optimised operation of the separating apparatus and the continuous operation of the panel line, generally at high operating speed.

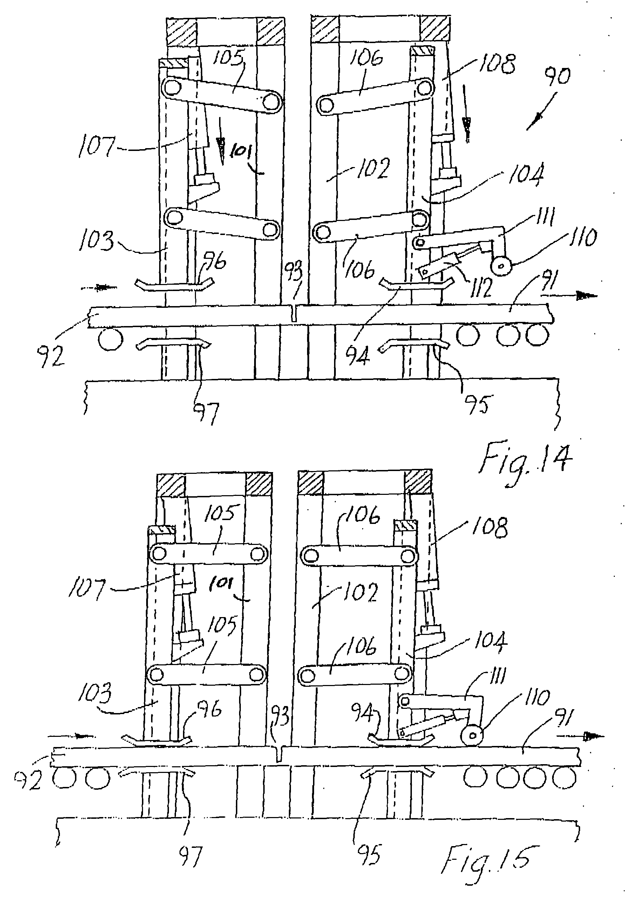

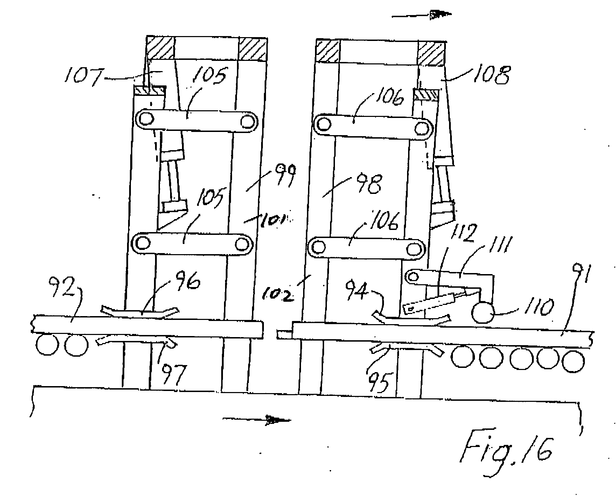

Referring to Figs. 14 to 16, there is illustrated a panel breaking apparatus 90 used in the method of the invention for separating a leading panel 91 from a trailing panel 92 at the cut joint 93. A first clamp comprising a first upper clamping head 94 and a first lower clamping head 95 grips the leading panel 91. A second clamp comprising a second upper clamping head 96 and a second lower clamping head 97 grips the trailing panel 91. The first and second clamps are mounted on separate carriages 98, 99 which are moved apart from the position illustrated in Figs. 14 and 15 to the separated position illustrated in Fig. 16 to separate the adjacent panels 91, 92 at the joint from the joined position to the separated position.

The carriages 98, 99 each comprise a post 101, 102 which is fixed relative to the respective panel 91, 92 and a movable post 103, 104. The posts 101, 103 and 102, 104 are interconnected by pivot arms 105, 106 and the posts 101, 102, 103, 104 are also interconnected by respective rams 107, 108. To engage the upper clamp head 94, 96 with the adjacent panels 91, 92, the rams 107, 108 are operated from the raised release position illustrated in Fig. 15 to move the posts 103, 104 on the pivot arms 105, 106 to the extended engaged position illustrated in Figs. 15 and 16. The lower clamps 95, 97 are also operated by lower rams, not shown.

At least the leading clamp may be provided with a roller 110 on a guide arm 111 pivotally connected to the movable post 104 and movable by a guide ram 112. The roller 110 rides on the surface of the backing tray 3 of the panel 91 to position the upper clamps 94, 96 as short a distance as possible above the backing tray. In this way, the distance through which the upper clamp heads 94, 96 travel is minimised. Consequently, the speed of the panel separation process is optimised.

It will be noted that the lower clamp heads 95 and 97 are spaced in the release position illustrated in Fig. 14 below the lower surface of the panels 91, 92. This ensures that grit and dirt are not trapped which could lead to damage to the exposed surface of the panel.

The carriages 98, 99 on which the clamps are mounted travel with the panels as they progress along the production line. This is important in ensuring that processing time is optimised as the panels are not stopped during the separation process.

It will also be appreciated that the breaker means may include a blade means to provide a smooth cut of the foam core through to the lower skin, on operation of the breaking means, e.g. on operation of the clamping means and/or on application of the separation force.

The invention provides a highly optimised and efficient method and apparatus for manufacturing insulating panels.

The invention is not limited to the embodiments hereinbefore described which may be varied in detail.

## Claims

1. A method for manufacturing an insulating panel of the type comprising a first skin and a second skin having an insulating core therebetween, the method comprising the steps of:-
providing a first outer skin length having a leading edge and a trailing edge;
providing a following second outer skin length having a leading edge and a trailing edge;
leading the first outer skin length along a flat bed with the outer surface of the skin lowermost;
leading the following outer skin length along a flat bed with the outer surface of the skin lowermost;
partially overlapping the second outer skin length with the first outer skin length, the leading edge of the second outer skin length overlapping the trailing edge of the first skin length;
applying a jointing means across the joint between the leading an following outer skin lengths;
applying liquid insulating foam reactants onto the outer skin lengths;
leading an inner skin over the outer skin lengths including the joint; heating the assembly of the outer and inner skins in an oven to allow the liquid foam reactants to expand and form an insulating core between the skins;
providing a control signal means; and
performing operations in accordance with the control signal means;
**characterised in that** the method comprises the steps of:-
detecting the leading edge of the second outer skin length at the overlap to provide a first control signal.;
detecting the trailing edge of the first outer skin length at the overlap to provide a second control signal; and
disabling the operation unless both of the first and second control signals are provided to a controller.

2. A method as claimed in claim 1 wherein the edges are detected using lasers.

3. A method as claimed in claim 1 or 2 wherein the operation comprises applying a jointing tape across the joint at the overlap of the leading edge of the second outer panel length and the trailing edge of the first outer panel length.

4. A method as claimed in claim 3 wherein the jointing tape is applied by drawing a jointing tape across the joint between the first and second outer skin lengths and automatically applying the tape to the joint between the outer skin lengths.

5. A method as claimed in claim 4 wherein the outer skin lengths are profiled and the method includes the step of conforming the jointing tape to the profile of the outer skin lengths.

6. A method as claimed in any preceding claim wherein the operation performed is cutting the sinner skin and the foam core of an insulating panel assembly.

7. A method as claimed in claim 6 comprising providing a cutting means having a leading cutting means and a trailing cutting means; using the leading cutting means, cutting at least the inner skin and forming a first cut; and leading then trailing cutting means through the first cut to cut the foam core.

8. A method as claimed in any preceding claim wherein the operation performed is applying a separating force to separate the panels at the joint.

9. A method as claimed in claim 8 comprising the steps of:-
providing a first clamping means and a second clamping means;
clamping a leading panel section adjacent to the joint between adjacent panel sections;
clamping a trailing panel section adjacent to the joint between adjacent panel sections; and
after clamping, applying a separating force between the first and second clamping means to separate the panel sections at the joint.

## Patentansprüche

1. Verfahren zum Herstellen einer Isolierplatte des Typs, der eine erste Haut und eine zweite Haut mit einem Isolierkern dazwischen aufweist, wobei das Verfahren die folgenden Schritte aufweist:
Bereitstellen einer ersten Außenhautlänge mit einer Vorderkante und einer Hinterkante;
Bereitstellen einer folgenden zweiten Außenhautlänge mit einer Vorderkante und einer Hinterkante;
Führen der ersten Außenhautlänge entlang eines Flachbetts, wobei sich die äußere Oberfläche der Haut an unterster Stelle befindet;
Führen der folgenden Außenhautlänge entlang eines Flachbetts, wobei sich die äußere Oberfläche der Haut an unterster Stelle befindet;
teilweise Überlappen der zweiten Außenhautlänge mit der ersten Außenhautlänge, wobei die Vorderkante der zweiten Außenhautlänge die Hinterkante der ersten Hautlänge überlappt;
Aufbringen eines Verbindungsmittels über der Verbindungsstelle zwischen der vorderen Außenhautlänge und den folgenden Außenhautlängen;
Aufbringen von flüssigen Isolierschaumbildnern auf die Außenhautlängen;
Führen einer Innenhaut über die Außenhautlängen einschließlich der Verbindungsstelle;
Erhitzen der Baugruppe aus den Außen- und Innenhäuten in einem Ofen, um Ausdehnen der flüssigen Schaumbildner und Bilden eines Isolierkerns zwischen den Häuten zu ermöglichen,
Bereitstellen eines Steuersignalmittels; und
Ausführen von Arbeitsgängen in Übereinstimmung mit dem Steuersignalmittel;
**dadurch gekennzeichnet, dass** das Verfahren die folgenden Schritte aufweist:
Ermitteln der Vorderkante der zweiten Außenhautlänge an der Überlappungsstelle zum Liefern eines ersten Steuersignals;
Ermitteln der Hinterkante der ersten Außenhautlänge an der Überlappungsstelle zum Liefern eines zweiten Steuersignals; und
Deaktivieren des Arbeitsgangs, wenn nicht sowohl das erste als auch das zweite Steuersignal einem Kontroller zugeführt werden.

2. Verfahren nach Anspruch 1, bei dem die Kanten unter Verwendung von Lasern ermittelt werden.

3. Verfahren nach Anspruch 1 oder 2, bei dem der Arbeitsgang das Aufbringen eines Fugenbands über der Verbindungsstelle an der Überlappungsstelle der Vorderkante der zweiten Außenplattenlänge und der Hinterkante der ersten Außenplattenlänge aufweist.

4. Verfahren nach Anspruch 3, bei dem das Fugenband durch Ziehen eines Fugenbands über die Verbindungsstelle zwischen der ersten und zweiten Außenhautlänge und automatisches Aufbringen des Bands an der Verbindungsstelle zwischen den Außenhautlängen aufgebracht wird.

5. Verfahren nach Anspruch 4, bei dem die Außenhautlängen Profile aufweisen und das Verfahren den Schritt umfasst, das Fugenband an das Profil der Außenhautlängen anzupassen.

6. Verfahren nach einem vorhergehenden Anspruch, bei dem der ausgeführte Arbeitsgang darin besteht, die Innenhaut und den Schaumkern einer Isolierplattenbaugruppe zu zerschneiden.

7. Verfahren nach Anspruch 6, das Folgendes umfasst: Bereitstellen eines Schneidmittels mit einem vorderen Schneidmittel und einem hinteren Schneidmittel; Verwenden des vorderen Schneidmittels, Zerschneiden wenigstens der Innenhaut und Bilden eines ersten Schnitts; und Führen des hinteren Schneidmittels durch den ersten Schnitt zum Zerschneiden des Schaumkerns.

8. Verfahren nach einem vorhergehenden Anspruch, bei dem der ausgeführte Arbeitsgang darin besteht, eine Trennkraft zum Trennen der Platten an der Verbindungsstelle anzulegen.

9. Verfahren nach Anspruch 8, das die folgenden Schritte umfasst:
Bereitstellen eines ersten Einspannmittels und eines zweiten Einspannmittels;
Einspannen eines vorderen Plattenabschnitts angrenzend an die Verbindungsstelle zwischen benachbarten Plattenabschnitten;
Einspannen eines hinteren Plattenabschnitts angrenzend an die Verbindungsstelle zwischen benachbarten Plattenabschnitten; und
nach Einspannen, Anlegen einer Trennkraft zwischen dem ersten und zweiten Einspannmittel, um die Plattenabschnitte an der Verbindungsstelle zu trennen.

## Revendications

1. Procédé de fabrication d'un panneau isolant du type comportant une première enveloppe et une deuxième enveloppe ayant une couche centrale isolante entre elles, le procédé comportant les étapes consistant à :
mettre en oeuvre une première longueur d'enveloppe extérieure ayant un bord avant et un bord arrière ;
mettre en oeuvre une longueur suivante d'enveloppe extérieure ayant un bord avant et un bord arrière ;
faire avancer la première longueur d'enveloppe extérieure le long d'un plateau horizontal, la surface extérieure de l'enveloppe étant tournée vers le bas ;
faire avancer la longueur suivante d'enveloppe extérieure le long d'un plateau horizontal, la surface extérieure de l'enveloppe étant tournée vers le bas ;
faire chevaucher partiellement la deuxième longueur d'enveloppe extérieure et la première longueur d'enveloppe extérieure, le bord avant de la deuxième longueur d'enveloppe extérieure chevauchant le bord arrière de la première longueur d'enveloppe ;
poser un moyen de jonction en travers du joint entre la longueur avant d'enveloppe extérieure et la longueur suivante d'enveloppe extérieure ;
appliquer des réactifs liquides de mousse isolante sur les longueurs d'enveloppe extérieure ;
faire avancer une enveloppe intérieure sur les longueurs d'enveloppe extérieure y compris le joint ;
chauffer l'ensemble constitué de l'enveloppe extérieure et de l'enveloppe intérieure dans un four pour permettre aux réactifs liquides de mousse de se dilater et former une couche centrale isolante entre les enveloppes ;
mettre en oeuvre un moyen de signal de commande ; et
effectuer des opérations en fonction du moyen de signal de commande ;
**caractérisé en ce que** le procédé comporte les étapes consistant à :
détecter le bord avant de la deuxième longueur d'enveloppe extérieure au niveau du chevauchement afin de mettre en oeuvre un premier signal de commande ;
détecter le bord arrière de la première longueur d'enveloppe extérieure au niveau du chevauchement afin de mettre en oeuvre un deuxième signal de commande ; et
désactiver l'opération sauf si le premier signal de commande et le deuxième signal de commande sont tous les deux fournis à un dispositif de commande.

2. Procédé selon la revendication 1, dans lequel les bords sont détectés en utilisant des lasers.

3. Procédé selon la revendication 1 ou la revendication 2, dans lequel l'opération comporte la pose d'un ruban de jonction en travers du joint au niveau du chevauchement du bord avant de la deuxième longueur de panneau extérieur et du bord arrière de la première longueur de panneau extérieur.

4. Procédé selon la revendication 3, dans lequel le ruban de jonction est posé en étirant un ruban de jonction en travers du joint entre la première longueur d'enveloppe extérieure et la deuxième longueur d'enveloppe extérieure et en posant automatiquement le ruban sur le joint entre les longueurs d'enveloppe extérieure.

5. Procédé selon la revendication 4, dans lequel les longueurs d'enveloppe extérieure sont profilées et le procédé comprend l'étape consistant à ajuster le ruban de jonction en fonction du profil des longueurs d'enveloppe extérieure.

6. Procédé selon l'une quelconque des revendications précédentes, dans lequel l'opération effectuée découpe l'enveloppe intérieure et la couche centrale de mousse d'un ensemble de panneau isolant.

7. Procédé selon la revendication 6, comportant la mise en oeuvre d'un moyen de découpe ayant un moyen de découpe avant et un moyen de découpe arrière ; l'utilisation du moyen de découpe avant, pour couper au moins l'enveloppe intérieure et former une première découpe ; et l'avance du moyen de découpe arrière au travers de la première découpe pour couper la couche centrale de mousse.

8. Procédé selon l'une quelconque des revendications précédentes, dans lequel l'opération effectuée exerce une force de séparation pour séparer les panneaux au niveau du joint.

9. Procédé selon la revendication 8, comportant les étapes consistant à :
mettre en oeuvre un premier moyen de serrage et un deuxième moyen de serrage ;
serrer une section de panneau avant de manière adjacente au joint entre les sections de panneau adjacentes ;
serrer une section de panneau arrière de manière adjacente au joint entre les sections de panneau adjacentes ; et
après avoir effectué le serrage, exercer une force de séparation entre le premier moyen de serrage et le deuxième moyen de serrage pour séparer les sections de panneau au niveau du joint.
